# EUROPEAN PATENT APPLICATION

(11) **EP 0 562 948 A1**
(43) Date of publication of application: **29.09.1993**
(21) Application number: 93400747.7
(22) Date of filing: 23.03.1993
(51) Int. Cl.: G08B 15/00

(54) **Housing assembly for housing a surveillance television camera**

(30) Priority: 23.03.1992 JP 95853/92
(71) Applicant: SONY CORPORATION, Tokyo (JP)
(72) Inventor: Kizawa, Shigemitsu, c/o Sony Corporation, Shinagawa-ku, Tokyo (JP); Shindo, Koji, c/o Sony Corporation, Shinagawa-ku, Tokyo (JP); Hisatsune, Toshiyuki, c/o Sony Corporation, Shinagawa-ku, Tokyo (JP)
(74) Representative: Thévenet, Jean-Bruno

(57) **Abstract**

A housing assembly for housing a surveillance television camera comprises a housing member (3) to house the surveillance television camera therein, having a front wall provided with a window paned with a glass filter (6) through which the surveillance television camera receives light rays representing the scene of a surveillance zone, and a flange to be fastened to a fixed structure; and covering member (2) to cover the housing member (3), having a front wall provided with an opening (2c) which is positioned opposite to the window of the housing member (3) when the covering member (2) is put on the housing member (3), and capable of covering the housing member (3) so that the surveillance television camera housed in the housing member (3) will not be perceptible. Since the housing assembly is simple in shape and appearance and can be colored in a color harmonizing with the ambient color, the housing assembly is scarcely noticeable and does not make people aware of being under surveillance.

## Description

### BACKGROUND OF THE INVENTION

### Field of the Invention

The present invention relates to a housing assembly for housing a surveillance television camera.

### Description of the Prior Art

The surveillance television camera has been used in CCTV systems (closed-circuit television systems) for surveillance to prevent crimes. Recently, the surveillance television camera has been applied to various purposes, such as security management in public installations where a great many people gather, for example, railroad stations, customer management in service industries, for example, hotel business, and market research for investigating and analyzing the flow of people, in addition to surveillance to prevent crimes.

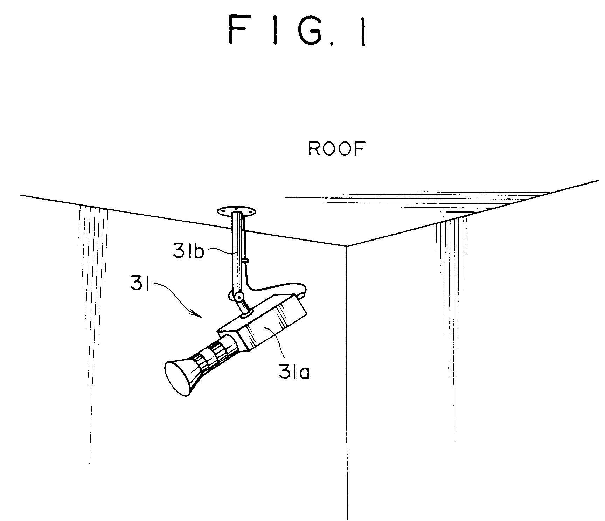

As shown in Fig. 1, when using a surveillance television camera assembly 31 comprising a surveillance television camera 31a, such as an industrial CCD camera, and a bracket 31b for such purposes including surveillance, management, investigation and analysis, the surveillance television camera 31a is attached to the bracket 31b, and the bracket 31b is fixed to the ceiling or the wall. A surveillance television camera having a cylindrical or a dome-like external shape and suspended from the ceiling or held on the wall by a bracket has been also used for the same purposes.

Since the conventional surveillance television camera is suspended from the ceiling or held on the wall by the bracket, the surveillance television camera can easily be seen by people and people will soon notice that they are under surveillance. Although such easily noticeable disposition of the surveillance television camera may be effective for warning to prevent crimes, effective data for security management in places, such as railroad stations,where a great many people gather, customer management in service industries, such as hotel business, and market research for investigating and analyzing the flow of people cannot be acquired because people will be aware of the surveillance television camera and will be conscious of being under surveillance.

A housing assembly for electrical apparatus, disclosed in U.S. Patent No. 4,414,576 has a housing capable of being opened to house a television camera. This housing in which a surveillance television camera is housed may be less noticeable than the naked industrial CCD camera and the surveillance television camera having a cylindrical or dome-like external shape. However, this housing assembly does not perfectly harmonize with the ceiling or the wall and hence people will be more or less conscious of being under surveillance.

### SUMMARY OF THE INVENTION

Accordingly, it is an object of the present invention to provide a housing assembly capable of concealing a surveillance television camera therein so that people may not be aware of the surveillance television camera.

A housing assembly for housing a surveillance television camera, in one aspect of the present invention comprises: a housing member to house the surveillance television camera therein, having a front wall provided with a window paned with a glass filter through which the surveillance television camera receives light rays representing the scene of a surveillance zone, and a flange to be fastened to a fixed structure; and a covering member to cover the first housing member, having a front wall provided with an opening which is positioned opposite to the window of the housing member when the covering member is put on the housing member, and capable of covering the housing member so that the surveillance television camera housed in the housing member will not be perceptible.

### BRIEF DESCRIPTION OF THE DRAWINGS

The above and other objects, features and advantages of the present invention will become more apparent from the allowing description taken in connection with the accompanying drawings, in which:
Fig. 1 is a perspective view of a conventional surveillance television camera as installed in a place to be observed;
Fig. 2 is an exploded perspective view of a housing assembly in a preferred embodiment according to the present invention; and
Fig. 3 is a perspective view of the housing assembly of Fig. 2 as installed on the ceiling of a room.

### DETAILED DESCRIPTION OF THE PREFERRED EMBODIMENTS

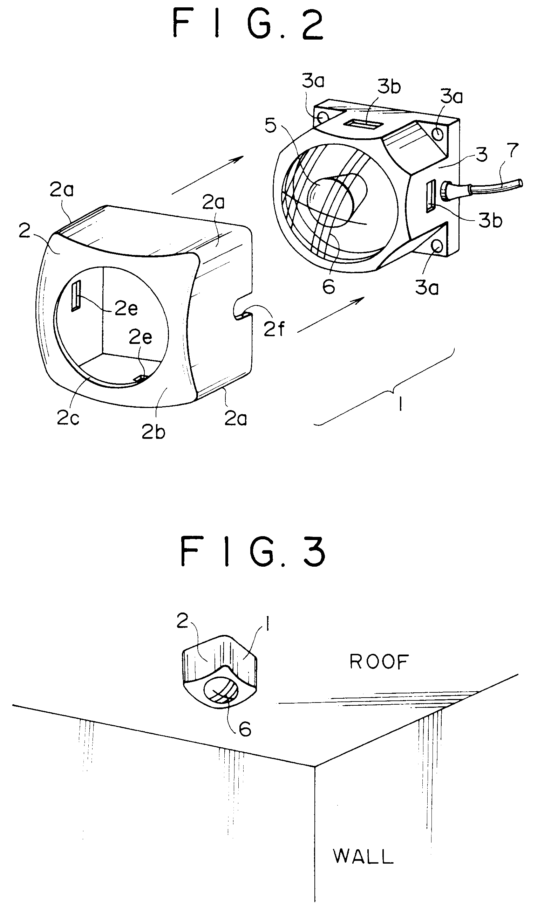

Referring to Fig. 2, a housing assembly 1 comprises a housing member 3 and a covering member 2. A television camera comprising a lens 5, a CCD imaging device, not shown, and an electric circuit, not shown, is installed in the housing member 3. A cover attached to the rear end of the housing member 3 is opened for the maintenance of the television camera, for setting the television camera in a desired position or for changing the direction of the optical axis of the television camera. The housing member 3 has the shape of a generally rectangular cylinder having a rectangular flange formed by beveling the four edges thereof. The flange is provided with through holes 3a through which screws are screwed in a fixed structure to fasten the housing member 3 to the fixed structure. Holes 3b are formed respectively in the four side walls of the housing member 3. The housing member 3 is provided with a window of a large diameter in its front wall, and the window is paned with a curved glass filter 6. The television camera comprising the lens 5, the CCD imaging device and the electric circuit is sealed in the housing member 3. A cable 7 connected to the television camera received in the housing member 3 extends outside through one side wall of the housing member 3. Although the housing member 3 having the beveled edges and provided with the through holes 3a has an aesthetically unsatisfactory external shape, the housing member 3 may be designed so that the housing member 3 is easy to form and easy to be attached to a desired structure, disregarding aesthetic composition, because the housing member 3 is covered entirely with the covering member 2.

The covering member 2 has the shape of a substantially rectangular cup. The four edges 2a of the covering member 2 are rounded and the front wall 2b thereof is curved in a spherical shape. The covering member 2 is provided with an opening 2c in the front wall 2b. When the covering member 2 is put on the housing member 3, the opening 2c is positioned opposite to the glass filter 6. Four projections 2e are formed in the inner surfaces of the side walls of the covering member 2. When the covering member 2 is put on the housing member 3, the projections 2e snap into the holes 3b formed in the side walls of the housing member 3 to hold the covering member 2 securely on the housing member 3. A recess 2f is formed in one side wall of the covering member 2 at a position corresponding to the cable 7.

The cable 7 is connected to a camera control unit, a camera switching unit, a split screen adapter and the like installed in a monitor room, and a time lapse VTR, a video monitor and the like are connected to the foregoing devices. If the ceiling or the wall to which the housing member 3 is attached is provided internally with wiring passages, the cable 7 is inserted in a nearby wiring passage so that a least portion of the cable 7 is exposed. The cable 7 may be extended outside the housing member 3 through the rear wall of the housing member 3 and inserted in a wiring passage extending behind the housing member 3.

The housing member 3 housing the surveillance television camera is fastened to a fixed structure, the covering number 2 is put on the housing member 3 with the projections 2e thereof engaging the holes 3b of the housing member 3 and the cable 7 is connected to the monitoring equipment installed in the monitoring room to complete a CCTV system. The CCTV system is installed in a desired place according to purposes such as security management in a public installation where a great many people gather, such as a railroad station, customer management in service industries, such as hotel business, or market research for investigating and analyzing the flow of people.

Since the covering member 2 of the housing assembly 1 is simple in shape and appearance, the housing assembly 1 is scarcely noticeable. If the covering member 2 is colored in the same color as or similar to that of the ambience, the housing assembly 1 merges into the ambience and will become more unnoticeable. Since the housing assembly 1 is simple in shape and appearance, and the television camera sealed in the housing member 3 is covered with the glass filter 6, people will mistake the housing assembly 1 for a smoke detector, a sprinkler or a loudspeaker even if people notice the housing assembly 1. Thus, the housing assembly 1 does not make people aware of being under surveillance.

When the color of the housing assembly 1 does not harmonize with the ambient color, the housing assembly 1 can be colored in a desired color on the site by painting or the like. When changing the color of the housing assembly, the covering member 2 is removed from the housing member 3, and only the covering member 2 may be painted in a desired color. Therefore, the color filter 6 will not be smeared with paint.

As is apparent from the foregoing description, the housing assembly according to the present invention harmonizes easily with the ambience, is scarcely noticeable when installed in a desired place, and does not make people aware of being under surveillance.

Although the invention has been described in its preferred form with a certain degree of particularity, obviously many changes and variations are possible therein. It is therefore to be understood that the present invention may be practiced otherwise than as specifically described herein without departing from the scope and spirit thereof.

## Claims

1. A housing assembly for housing a surveillance television camera, comprising:
a housing member (3) to house the surveillance television camera therein, having a front wall provided with a window paned with a glass filter (6) through which the surveillance television camera receives light rays representing the scene of a surveillance zone, and a flange portion to be fastened to a fixed structure; and
a covering member (2) to cover the housing member (3), having a front wall (2b) provided with an opening (2c) which is positioned opposite to the window of the housing member (3) when the covering member (2) is put on the housing member (3), and capable of covering the housing member (3) so that the surveillance television camera housed in the housing member (3) will not be perceptible.

2. A housing assembly according to claim 1, wherein said covering member (2) is put on said housing member (3) to cover the housing member (3) entirely excluding the window of the housing member, and the covering member (2) is secured detachably to the housing member (3) by fastening means.

3. A housing assembly according to claim 2, wherein said fastening means comprises holes (3b) formed respectively in the side walls of the housing member (3) and projections (2c) formed respectively on the inner surfaces of the side walls of the covering member (2), and the projections of the covering member (2) engage the holes (3b) of the housing member (3), respectively, to hold the covering member (2) securely on the housing member (3) when the covering member (2) is put on the housing member (3).
